# EUROPEAN PATENT APPLICATION

(11) **EP 2 574 465 A1**
(43) Date of publication of application: **03.04.2013**
(21) Application number: 12006675.8
(22) Date of filing: 24.09.2012
(51) Int. Cl.: B41F 33/00, B41F 33/02, B31B 1/88, G01N 21/00

(54) **Three dimensional pattern inspection system**

(30) Priority: 26.09.2011 US 201161539231 P
(71) Applicant: Advanced Vision Technology (AVT) Ltd., 45241 Hod Hasharon (IL)
(72) Inventor: Ben-Ezra, Barry, 47281 Ramat Hasharon (IL); Aizenshtein, Gennady, 49398 Petah Tikva (IL)
(74) Representative: Schuhmann, Albrecht

(57) **Abstract**

An inspection system of a printed substrate, the printed substrate at least includes a three-dimensional pattern, the system includes a light source, for emitting light beams toward the substrate, the light beams being substantially aligned when impinging on the substrate, an imager, for acquiring an image of the substrate, the image including a representation of the three-dimensional pattern and of the matter printed on the substrate and a processor, coupled with the light source and the imager, for processing the acquired image to determine the correctness of the three-dimensional pattern.

## Description

### FIELD OF THE DISCLOSED TECHNIQUE

The disclosed technique relates to inspection systems, in general, and to methods and systems for inspecting three-dimensional patterns such as Braille alphabet, in particular.

### BACKGROUND OF THE DISCLOSED TECHNIQUE

The Braille alphabet is a system for reading and writing for blind, visually impaired or partially sighted people. Generally, the Braille alphabet has texture that blind people can feel with their fingers and thus, read by touch. In the Braille alphabet, each character and symbol (e.g., a comma, an exclamation point, a question mark and the like) are represented by a distinct pattern of dots selected from six dot positions, arranged in a rectangle having two columns of three dots each. This rectangle is referred to as a 'Braille cell'. A dot may be raised (i.e., protruding) or embossed (i.e., either a dot may protrude or create a depression) at any of the six positions.

As a result of recent regulations in some jurisdictions, pharmaceutical companies are obliged to label all packages of medicine in Braille, specifying information relating to the medicine. Thus, blind, visually impaired or partially sighted individuals may identify the medicine and the details thereof. There is therefore a necessity to ensure that the Braille on such packages is correct in terms of the represented characters with respect to the intended language content. In addition, there is a necessity to ensure that the Braille on such packages is correct with respect to the location of the Braille dots relative to each other, to the printed text and to the completeness and the size of the Braille dots.

### SUMMARY OF THE PRESENT DISCLOSED TECHNIQUE

It is an object of the disclosed technique to provide a novel method and system for methods and systems for inspecting three-dimensional patterns such as Braille alphabet. In accordance with the disclosed technique, there is thus provided an inspection system of a printed substrate, the printed substrate at least including a three-dimensional pattern. The system includes a light source, and imager and a processor. The light source emits light beams toward the substrate. The light beams are substantially aligned when impinging on the substrate. The imager acquires an image of the substrate. The image includes a representation of the three-dimensional pattern and of the matter printed on the substrate. The processor is coupled with the light source and with the imager, and processes the acquired image to determine the correctness of the three-dimensional pattern.

### BRIEF DESCRIPTION OF THE DRAWINGS

The disclosed technique will be understood and appreciated more fully from the following detailed description taken in conjunction with the drawings in which:
Figure 1 is a schematic illustration of an example of an acquired image of a substrate including Braille dots and non-Braille matter;
Figure 2 is a schematic illustration of a system for inspecting Braille, constructed and operative in accordance with an embodiment of the disclosed technique;
Figure 3 is another schematic illustration of an example image of a printed substrate with Braille dots in accordance with an embodiment of the disclosed technique;
Figure 4 is a schematic illustration of a system for inspecting Braille alphabet and non-Braille matter printed on a substrate, in accordance with another embodiment of the disclosed technique;
Figure 5 is a schematic illustration of a system for inspecting Braille alphabet and non-Braille matter printed on a substrate, constructed and operative in accordance with a further embodiment of the disclosed technique; and
Figures 6A-6D are schematic illustrations of a cross sectional view of a detector with a substrate moving under the detector, in accordance with another embodiment of the disclosed technique.

### DETAILED DESCRIPTION OF THE EMBODIMENTS

The disclosed technique overcomes the disadvantages of the prior art by providing an inspection system for inspecting three dimensional (3D) patterns in general and an inspection system for inspecting Braille alphabet on printed substrates such as packages in particularly. The printed substrate includes Braille dot protrusions or Braille dot cavities, as well as matter printed, deposited or laminated thereon. The matter printed on the substrate, as well as any deposited or laminated materials on the substrate, are herein collectively referred to as 'non-Braille matter'.

The system according to the disclosed technique includes a light source, an imager and a processor. The light source illuminates the printed substrate. Light incident of the printed substrate reflects either diffusively or specularly or both (i.e., a portion of the light incident of the printed substrate diffusively reflects and a portion of the light specularly reflects off the printed substrate). The imager acquires an image of the printed substrate. The acquired images include a representation of the non-Braille matter and of the Braille dots. According to the disclosed technique, the respective position (i.e., location and orientation) in a reference coordinate system, of the imager and the light source, as well as parameters characterizing light beams emitted by the light source, are determined to maximize the contrast between the representation, in the acquired image, of the non-Braille matter printed on printed the substrate and the representations of Braille dots. The processor processes the acquired image to determine Braille alphabet characteristics. Braille alphabet characteristics include, for example, the location of the Braille dots relative to each other and to the printed text, the completeness of the Braille dots and the size of the Braille dots. Braille alphabet characteristics may further include the represented characters and the correctness of the Braille text with respect to the intended language content. It is noted that although the disclosed technique is exemplified herein with reference to Braille, the disclosed technique is applicable for inspection of any three-dimensional (3D) patterns (i.e., protruding or recessed). For example, the disclosed technique is applicable for inspection protruding letters and symbols in cigarette packages.

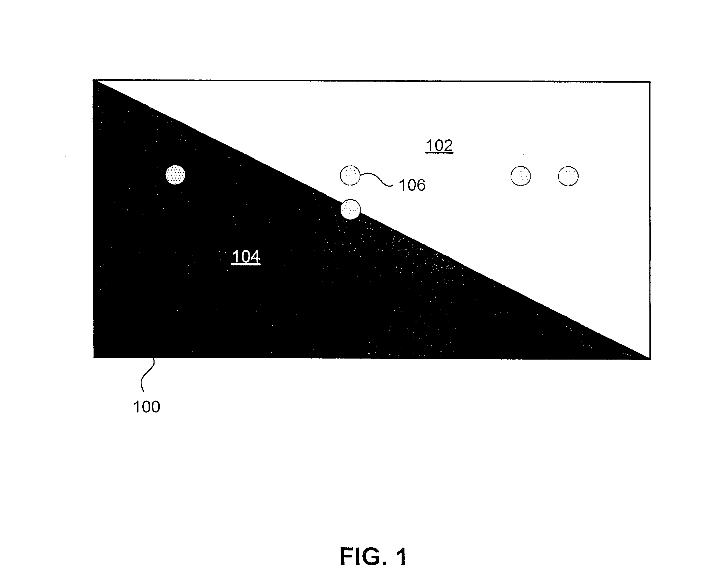

Reference is now made to Figure 1, which is a schematic illustration of an example of an acquired image, generally referenced 100, of a substrate including Braille dots and non-Braille matter. Image 100 is acquired when the light source and the imager are positioned without contrast maximization considerations. The printed substrate includes two regions of printed matter, a bright colored region and a dark colored region. The printed substrate further includes Braille dots. For example, the Braille dots are embossed on the printed substrate. Alternatively, the Braille dots are made of silicon drops applied on the printed substrate. It is noted that, when the Braille dots are embossed or made of transparent silicon, the color of the Braille dots may appear to be similar to the color of the matter printed substrate. Thus, the color of the representation of the Braille dots in the acquired image may also be similar to the color of the representation of the non-Braille matter printed on the substrate. Since the printed substrate includes a bright colored region and a dark colored region, acquired image 100 also includes two regions, a bright colored region 102 and a dark colored region 104. Acquired image 100 also includes representations of the Braille dots such as Braille dot representation 106. As can be seen in acquired image 100, the contrast between Braille dot representation 106 and bright colored region 102 is substantially low. This low contrast may result in some Braille dots being invisible in the image thus prohibiting the inspection of these Braille dots. It is therefore desirable to increase the contrast between the representation of the non-Braille matter and the representations of the Braille dots in an acquired image.

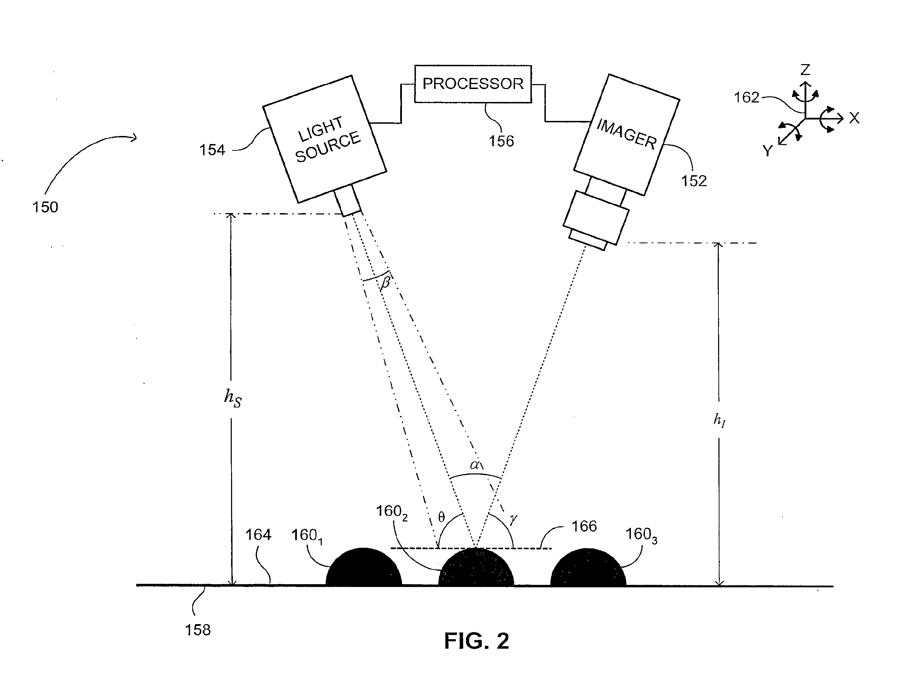

Reference is now made to Figure 2, which is a schematic illustration of a system for inspecting Braille, generally referenced 150, constructed and operative in accordance with an embodiment of the disclosed technique. System 150 includes an imager 152, a light source 154 and a processor 156. Processor 156 is coupled with imager 152 and with light source 154. Light source 154 emits light exhibiting predetermined light characteristics (i.e., the spectral band, intensity, phase and polarization of the light). For example, the characteristics of the light emitted by light source 154 may conform to a standard such as the CIE D65 illuminant, the CIE D50 illuminant, the CIE A illuminant and the like. Light source 154 may alternatively emit infrared (IR) light, for example, exhibiting wavelengths between 800 nanometers (nm) and 1000 nm, also known as the near infrared (NIR) band.

Imager 152 may be embodied as a line-scan camera, which includes a one-dimensional line detector such as a Charged Coupled Device (CCD) detector, a Complementary Metal Oxide Semiconductor (CMOS) detector and the like, that acquires a plurality of one-dimensional images. The plurality of one-dimensional images forms a two-dimensional spatial image. Alternatively, imager 152 can be embodied as an area camera, which includes a two-dimensional area detector that acquires a two-dimensional spatial image directly. The detector (not shown) of imager 152 is sensitive to the spectrum of light emitted by light source 154. Therefore, if light source 154 emits light in the visible spectrum, imager 152 may correspondingly be a color camera, which acquires images, where the color of each pixel is associated with a respective location in a selected color space, such as RGB (Red Green and Blue), CYMK (Cyan Yellow Magenta and Black), CIEXYZ and the like. If light source 154 emits light in the IR spectrum, imager 152 then acquires images in the IR spectral band.

Printed substrate 158 includes a surface 164 with Braille dots 160₁, 160₂ and 160₃ and matter printed thereon (not shown). Each one of Braille dots 160₁, 160₂ and 160₃ exhibits a substantially hemispherical shape. Braille dots 160₁, 160₂ and 160₃ may be embossed on printed substrate 158. Alternatively, Braille dots 160₁, 160₂ and 160₃ may be made of silicon drops applied to printed substrate 158.

Light source 154 emits a light beam toward printed substrate 158. A portion of the light impinging on surface 164 of printed substrate 158 and Braille dots 160₁, 160₂ and 160₃ reflects back toward imager 152. The other portion of the light impinging on surface 164 is either scattered or absorbed by printed substrate 158 and Braille dots 160₁, 160₂ and 160₃. Imager 152 acquires an image of printed substrate 158. Imager 152 provides the acquired image to processor 156. Processor 156 inspects the acquired image to determine Braille alphabet characteristics. The image employed for inspection of Braille alphabet characteristics is referred to herein as a 'Braille inspection image'. As mentioned above, Braille alphabet characteristics include, for example, the location of the Braille dots relative to each other and to the printed text, the location of the Braille cell on the substrate, the completeness of the Braille dots and the size of the Braille dots. Braille alphabet characteristics may further include the represented characters and the correctness of the Braille text with respect to the intended language content. Processor 156 may further determine the correctness of the Braille alphabet characteristics.

For processor 156 to inspect the representations of Braille dots 160₁, 160₂ and 160₃ in the Braille inspection image, the contrast between the representation of the non-Braille matter and the representations of Braille dots 160₁, 160₂ and 160₃ should be maximized. To maximize this contrast, the ratio between the light reflected from surface 164 of printed substrate 158 and the light reflected from Braille dots 160₁, 160₂ and 160₃, toward imager 152 should be maximized. To that end, the respective position (i.e., location and orientation) in a reference coordinate system 162, of each one of imager 152 and light source 154, is determined to maximize the contrast between the representation, in the acquired image, of the non-Braille matter printed on printed substrate 158 and the representations of Braille dots 160₁, 160₂ and 160₃. Furthermore, parameters characterizing light beams emitted by light source 154, such as the light intensity, the phase and the angular span β of the light beams emitted by light source 154, are also determined to maximize the contrast between the representation of the non-Braille matter and the representations of Braille dots 160₁, 160₂ and 160₃ in the acquired image. The relative position between imager 152 and light source 154 affects the angle α between the optical axes of imager 152 and light source 154. Furthermore, the relative position between imager 152 and light source 154 affects the heights *h_{I}* and *h_{S},* of imager 152 and light source 154 respectively, above substrate 158. These heights also affect the angles of incident of the light on the Braille dots as further explained below. It is noted that coordinate system 162 may be a Cartesian coordinate system, cylindrical coordinate system, spherical coordinate system and the like. The orientation of imager 152 and light source 154 may be specified according to Euler angles, Tait-Bryan angles and the like.

According to one alternative, the relative position between imager 152 and light source 154, as well as the parameters characterizing the light emitted by light source 154, are empirically determined to maximize the contrast between the representation in the acquired image of the non-Braille matter printed on printed substrate 158 and the representations of Braille dots 160₁, 160₂ and 160₃. According to another alternative, the light beams emitted by light source 154 are at least substantially aligned in the vicinity of substrate 158. Imager 152 and light source 154 are positioned relative to each other and relative to substrate 158 such that optical axes of imager 152 and light source 154 intersect a plane 166, tangent to the highest point of the Braille dots (i.e., highest relative to substrate 158), at equal angles. In such a configuration, the angle θ is equal to the angle γ as shown in Figure 2.

Since Braille dots 160₁, 160₂ and 160₃ either protrude from or are depressed into surface 164 of printed substrate 158, light impinging on Braille dots 160₁, 160₂ and 160₃ and on surface 164 of printed substrate 158 scatters and reflects in a plurality of different directions (i.e., diffuse reflection). Only light impinging on the Braille dots 160₁, 160₂ and 160₃, such that the angle of incident between the light and plane 166 is equal to the angle between the optical axis of imager 152 and plane 166, shall reflect back toward imager 152. Furthermore, since substrate 158 is substantially flat, a substantial portion of the light impinges on surface 164 of substrate 158 at an angle equal to the angle between the optical axis of imager 152 and surface 164 of substrate 158 and thus reflects back toward multi-channel imager 152. Thus, less light reflects back toward imager 152 from Braille dots 160₁, 160₂ and 160₃ than from surface 164. Due to this scattering caused by Braille dots 160₁, 160₂ and 160₃, the representations of Braille dots 160₁, 160₂ and 160₃ in an image acquired by imager 152 appears darker than the representation of the non-Braille matter.

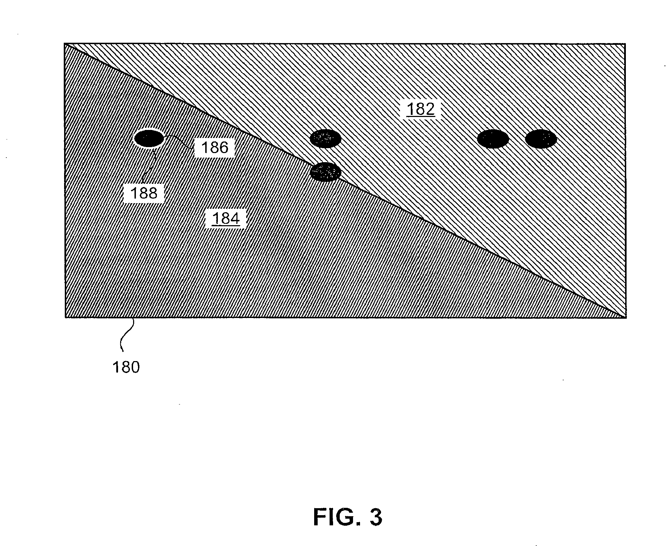

Reference is now made to Figure 3, which is another schematic illustration of an example image of a printed substrate with Braille dots, generally referenced 180, in accordance with an embodiment of the disclosed technique. Image 180 is acquired when the light source and the imager are positioned in their relative positions to maximize the contrast between the representations of the non-Braille printed matter and the representations of the Braille dots. The printed substrate, and therefore image 180, includes two regions, a bright colored region 182 and a dark colored region 184. The printed substrate further includes a plurality of Braille dots such as Braille dot 160₁, (Figure 1). As can be seen in image 180, the contrast between the representation 186 of the Braille dot and the representation of the non-Braille printed matter (i.e., bright colored region 182 and dark colored region 184) is high relative to the contrast in image 100 (Figure 1).

With reference to Figures 1, 2 and 3, processor 156 inspects the acquired image by processing the acquired image (e.g., filtering, histogram equalization and segmentation) and analyzing the processed image. For example, after processor 156 segments the acquired image, processor 156 then determines segment characteristics (e.g., location in the image, size, shape, color and the like) for each segment. Processor 156 then determines which segments correspond to the Braille dots according to the segment characteristics. For example, processor 156 determines which segments correspond to the Braille dots according to the contrast between a segment and its surrounding pixels (i.e., since the contrast between the representations of the Braille dots and the representations of the printed text in the acquired image is maximized). Alternatively, processor 156 determines which segments correspond to the Braille dots according to the shape of the segments. For example, in the case of hemispherical Braille dots, the representations of the Braille dots in the image, such as Braille do representation 186, will substantially exhibit either an elliptical or a circular shape. After determining which segments correspond to the Braille dots, processor 156 determines characteristics respective of the Braille dots according to the characteristics of the respective segments. For example, processor 156 determines the location of the dots in the image, the size of the dots, the shape of the dots and the height of the dots above the substrate and the like. Processor 156 may further determine the correctness of the written Braille text, for example, by determining the relative location of the Braille dots within a Braille cell, thus determining the printed letter in Braille. The determined letters may be compared to a stored version of the correct Braille text. Processor 156 may further determine the size of the Braille dots (i.e., according to the size of the segment) and determine if the size of the dots conforms to specified requirements. Furthermore, processor 156 may further determine the shape of the dots conforms to specified requirements. In particular, the height of the plurality of Braille dots may be estimated from ratios of geometrical parameters of the dot shapes in the image. For example, there is a correlation between the diameter and height of a Braille dot. Thus, the height of the dot may be estimated from a measurement of the diameter of the dot. As a further example, there is a correlation between characteristics (e.g., circumference, maximum width, minimum width, shape and the like) of the outer curve of the Braille dot representation and the height of the dot. With reference to Figure 3, curve 188 is the outer curve of Braille dot representation 186. Thus, the height of the dot may be estimated from measurements of the characteristics of the outer curve of the Braille dot representation.

In some print inspection scenarios, it may be required to employ the acquired images of the printed substrate to inspect both Braille alphabet and non-Braille matter. However, since the contrast in the acquired image between the representation of the non-Braille matter and the representation of the Braille dots is maximized, information related to the non-Braille matter printed, deposited or laminated on the substrate, may be lost. To inspect both Braille dots and printed matter, a multi-channel imager is used. According to one alternative, the multi-channel imager includes at least two different detectors and the light entering the imager is split between these detectors (e.g., 2 separate CCD cameras, one with 3 channels and one with a single channel). According to another alternative, the multi-channel imager includes a single detector with at least two groups of sensors (e.g., 4 lines of sensors in one CCD camera or 4 CCDs in one camera). One channel of the multi-channel imager is employed for acquiring an image for inspecting the non-Braille printed matter and the other channel is employed for acquiring a Braille inspection image. The image used for inspecting non-Braille printed matter is referred to herein as 'non-Braille inspection image'. When the multi-channel image includes four channels, three of the four channels are used to acquire a color image (e.g., RGB, XYZ, CMY, HIS and the like) for inspecting the non-Braille printed matter. The fourth channel is used to acquire image for inspecting the Braille dots (i.e., a Braille inspection image). A light source is positioned relative to the imager as described above in conjunction with Figure 2.

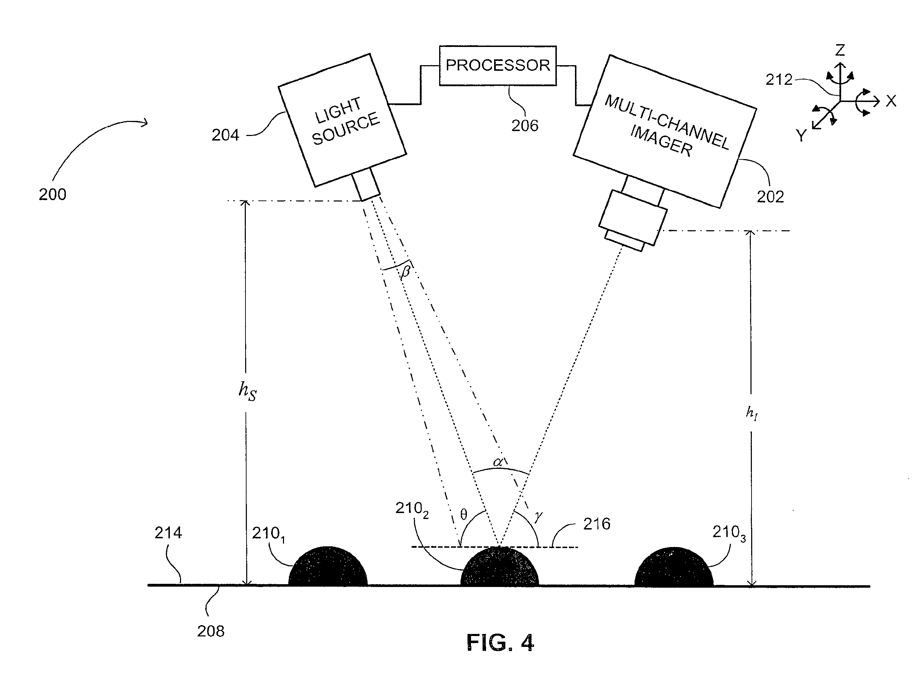

Reference is now made to Figure 4, which is a schematic illustration of a system, generally reference 200, for inspecting Braille alphabet and non-Braille matter printed on a substrate, in accordance with another embodiment of the disclosed technique. System 200 includes a multi-channel imager 202, a light source 204 and a processor 206. Processor 206 is coupled with multi-channel imager 202 and with light source 204. Multi-channel imager 202 includes at least two channels. According to one alternative, multi-channel channel imager 202 may be embodied as a camera, which includes at least two one-dimensional line detectors. Multi-channel imager 202 acquires a plurality of one-dimensional images in each spectrum. The plurality of one-dimensional images, form a two-dimensional spatial image in each spectrum. According to another alternative, multi-channel imager 202 can be embodied as a camera, which includes at least two two-dimensional area detectors. According to yet another alternative, multi-channel imager 202 may include a single detector with at least two lines of sensors. For example, multi-channel image is a 4CCD camera, which includes four one-dimensional line detectors. As a further example, multi-channel imager 202 is as a 4CCD camera, which includes four two-dimensional area detectors. According to yet another example, multi-channel imager 202 may include a single detector with four lines of sensors. When the multi-channel image includes four channels, three of the four channels are used to acquire a color image (e.g., RGB, XYZ, CMY, HIS and the like) for inspecting the non-Braille printed matter. The fourth channel is used to acquire image for inspecting the Braille dots (i.e., a Braille inspection image).

Printed substrate 208 includes a surface 214 with printed matter thereon and Braille dots 210₁, 210₂ and 210₃. Each one of Braille dots 210₁, 210₂ and 210₃ exhibits a substantially hemispherical shape. Braille dots 210₁, 210₂ and 210₃ may be embossed on printed substrate 208. Alternatively, Braille dots 210₁, 210₂ and 210₃ may be made of silicon drops applied to printed substrate 208.

Similar to light source 154 (Figure 2) light source 204 emits light exhibiting respective light characteristics. Furthermore, light source 204 may conform to a standard such as the CIE D65 illuminant, the CIE D50 illuminant, the CIE A illuminant and the like. Similarly to as described above in conjunction with Figure 2, the respective position in a reference coordinate system 212, of each one of multi-channel imager 202 and light source 204, as well as parameters characterizing light beams emitted by light source 204, are determined to maximize the contrast between the representation, in the acquired image, of the non-Braille matter printed on printed substrate 208 and the representations of Braille dots 210₁, 210₂ and 210₃.

Light source 204 emits a light beam toward a printed substrate 208. Since Braille dots 210₁, 210₂ and 210₃ either protrude from or are depressed into surface 214 of printed substrate 208, light impinging on Braille dots 210₁, 210₂ and 210₃ scatters and reflects in a plurality of different directions (i.e., diffuse reflection). Only light impinging on the Braille dots 210₁, 210₂ and 210₃, such that the angle of incident between the light and plane 216 is equal to the angle between the optical axis of multi-channel imager 202 and plane 216, shall reflect back toward multi-channel imager 202. Furthermore, since substrate 208 is substantially flat, a substantial portion of the light impinges on surface 214 of substrate 208 at an angle equal to the angle between the optical axis of multi-channel imager 202 and surface 214 of substrate 208 and thus reflects back toward multi-channel imager 202. Thus, less light reflects back toward multi-channel imager 202 from Braille dots 210₁, 210₂ and 210₃ than from surface 214. Due to this scattering caused by Braille dots 210₁, 210₂ and 210₃, the representations of Braille dots 210₁, 210₂ and 210₃ in an image acquired by multi-channel imager 202 appears darker than the representation of the non-Braille matter.

Multi-channel imager 202 acquires one image of the printed substrate employing one of the two channels and employs the other channel to acquire another image of printed substrate. When multi-channel imager 202 includes four channels, multi-channel imager 202 employs three channel to acquire a color non-Braille inspection image and the fourth channel to acquire a monochrome (e.g., Black and White) Braille inspection image. Multi-channel imager 202 provides the acquired images to processor 206. Processor 206 uses non-Braille inspection image for inspecting the non-Braille printed matter and the Braille inspection image for inspection of the Braille alphabet.. It is further noted that multi-channel imager 202 may be replaced with two different and separate imagers. One imager (e.g., an RGB camera) acquires non-Braille inspection images and the other imager (e.g., a monochrome camera) acquires Braille inspection images. When two different imagers are used, the relative position between light source 204 and the imager acquiring the Braille inspection images is determined to maximize the contrast between the representation in the acquired Braille inspection image, of the non-Braille matter printed on printed substrate 208 and the representations of Braille dots 210₁, 210₂ and 210₃.

The non-Braille inspection images acquire by multi-channel imager 202 of system 200 (Figure 4) may still include representations of the Braille dots. Consequently, the image of the non-Braille matter may be incomplete, thus preventing inspection of certain portions of the non-Braille matter. According to a further embodiment of the disclosed technique, two light sources emitting light which exhibits different respective light characteristics and situated at two different positions, are employed to illuminate the substrate. For example, one light source emits light in the visible spectral band and the other light source emits light in the IR spectral band. In general, the light in the visible spectral band is used for inspection of non-Braille matter and the light in the IR spectral band is used for inspection of the Braille alphabet. Consequently, a multi-channel imager, with detectors sensitive to the spectral bands of light emitted by the two light sources (e.g., a 4CCD camera) is employed as further explained below. Alternatively, two different imagers, each with a detector sensitive to a respective different spectral band, corresponding to the spectral bands of the light sources are used.

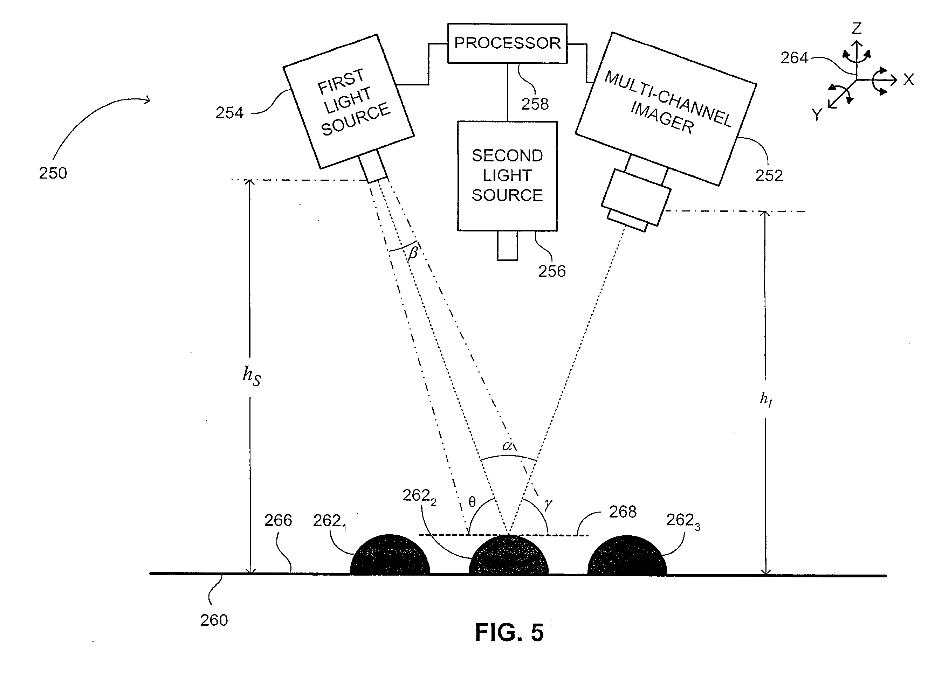

Reference is now made to Figure 5, which is a schematic illustration of a system, generally referenced 250, for inspecting Braille alphabet and non-Braille matter printed on a substrate, constructed and operative in accordance with a further embodiment of the disclosed technique. System 250 includes a multi-channel imager 252, a first light source 254, a second light source 256 and a processor 258. Processor 258 is coupled with multi-channel imager 252, with first light source 254 and with second light source 256. First light source 254 emits light exhibiting a first determined spectral band. For example, first light source 254 emits light in the NIR band. Second light source 256 emits light exhibiting a second determined spectral band. For example, second light source 256 emits light in the visible spectral band and conforms to a standard such as the CIE D65 illuminant, the CIE D50 illuminant, the CIE A illuminant and the like. First light source 254 is employed for inspecting Braille alphabet and second light source 256 is employed for inspecting non-Braille matter.

Multi-channel imager 252 is similar to multi-channel imager 202 (Figure 4) and includes at least two channels. However, in multi-channel imager 252, one channel is sensitive in the spectral band associated with the light emitted by first light source 254 (e.g., the IR spectrum) and the other channel is sensitive in the spectral band associated with the light emitted by second light source 256 (e.g., the visible spectrum). Furthermore, The respective position in a reference coordinate system 264, of each one of multi-channel imager 252 and first light source 254, as well as parameters characterizing light beams emitted by first light source 254, are determined to maximize the contrast between the representation, in the acquired image, of the non-Braille matter printed on printed substrate 260 and the representations of Braille dots 262₁, 262₂ and 262₃, similarly to as described above in conjunction with Figure 2. The position second light source 256 is conventionally determined to maximize the reflection of light from substrate 260 toward multi-channel channel imager 252. In general, first light source 254 and second light source 256 are situated at different positions (i.e., location and orientation) in a coordinate system 264 resulting in different respective angular orientations relative to substrate 260.

First light source 254 emits a light beam toward a printed substrate 260. Since Braille dots 262₁, 262₂ and 262₃ either protrude from or are depressed into surface 266 of printed substrate 260, light impinging on Braille dots 262₁, 262₂ and 262₃ scatters and reflects in a plurality of different directions (i.e., diffuse reflection). Only light impinging on the Braille dots 262₁, 262₂ and 262₃, such that the angle of incident between the light and plane 268 is equal to the angle between the optical axis of multi-channel imager 252 and plane 268, reflects back toward multi-channel imager 252. Furthermore, since substrate 260 is substantially flat, a substantial portion of the light impinge on surface 266 of substrate 260 at an angle equal to the angle between the optical axis of multi-channel imager 252 and surface 266 of substrate 260 and thus reflects back toward multi-channel imager 252. Thus, less light reflects back toward multi-channel imager 252 from Braille dots 262₁, 262₂ and 262₃ than from surface 266. Due to this scattering caused by Braille dots 262₁, 262₂ and 262₃, the representations of Braille dots 262₁, 262₂ and 262₃ in an image acquired by multi-channel imager 252 appears darker than the representation of the non-Braille matter. At the same time, first light source 254 emits light beams, second light source 256 also emits light beams toward printed substrate 260. The light emitted by second light source 256 also reflects back toward multi-channel imager 252.

Multi-channel imager 252 acquires one image of the printed substrate, in one spectral band, employing one of the two channels. Multi-channel imager 252 uses the other channel to acquire another image of printed substrate in the other spectral band. When multi-channel imager 252 includes four channels, multi-channel imager 252 employs three channels to acquire a color non-Braille inspection image and the fourth channel to acquire a monochrome Braille inspection image (e.g., Black and White). Multi-channel imager 252 provides the acquired images to processor 258. Processor 258 uses non-Braille inspection image for inspecting the non-Braille printed matter and the Braille inspection image for inspection of the Braille alphabet.

Similarly to as described above, multi-channel imager 252 may be replaced with two different and separate imagers. One imager (e.g., an RGB camera) acquires non-Braille inspection images and the other imager (e.g., a monochrome camera) acquires Braille inspection images. When two different imagers are used, the relative position between first light source 254 and the imager acquiring the Braille inspection images is determined to maximize the contrast between the representation in the acquired Braille inspection image, of the non-Braille matter printed on printed substrate 260 and the representations of Braille dots 262₁, 262₂ and 262₃. Processor 258 inspects a first acquired image acquired in the first spectral band (i.e., associated with the light emitted by first light source 254) to determine Braille alphabet characteristics and the correctness thereof similar to the processing described above in Figure 2 regarding processor 156 (Figure 2). Processor 258 further inspects the second acquired image (i.e., associated with the spectral band of second light source 256) to determine the characteristics of non-Braille matter printed on substrate 260. These characteristics of non-Braille matter are, for example, the distribution of ink (e.g., color and shade), as well as defects (e.g., Unwanted spots or streaks), which can be found by comparing the color characteristics of a reference image to the inspected image.

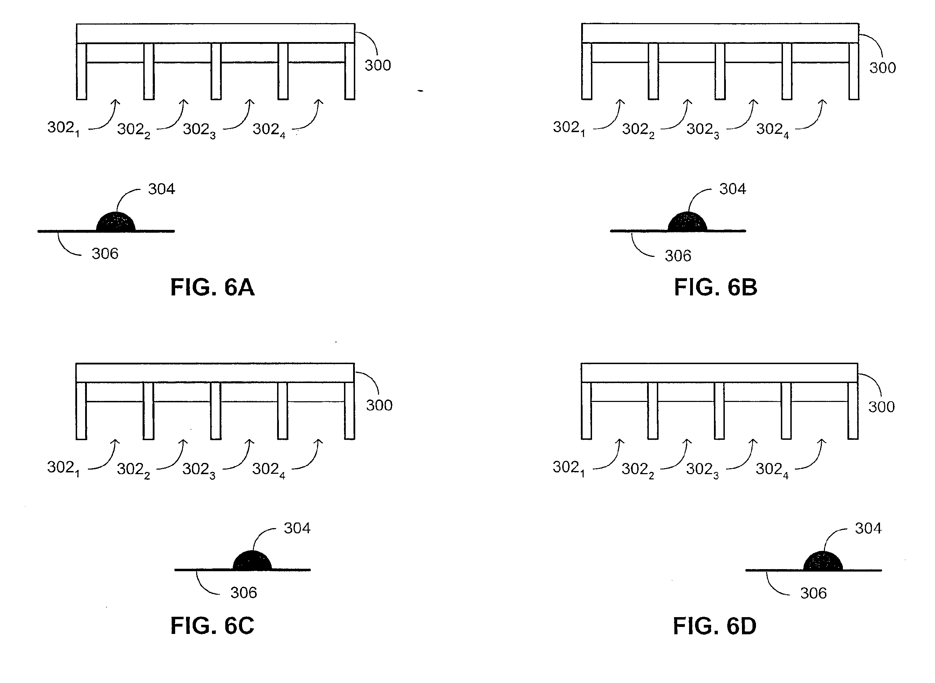

In the above description in conjunction with Figure 5, first light source 254 and second light source 256 emits light at different wavelength. According to a further embodiment of the disclosed technique, first light source 254 and second light source 256 emitting light at the same spectral band but at different times. Thus, for example, when multi-channel imager 252 is embodied as single detector with four lines of sensors, as substrate 260 moves under multi-channel imager 252, the operation of the sensors lines is synchronize with the movement of substrate 260. Reference is now made to Figures 6A-6D which are schematic illustrations of a cross sectional view of detector 300 with a substrate 306 moving under detector 300, in accordance with another embodiment of the disclosed technique and still referring to Figure 5. Detector 300 includes four lines of sensors 302₁, 302₂, 302₃, 302₄. Substrate 306 includes a Braille dot 304. Braille dot 304 moves under detector 300 with substrate 306. First light source 254 and second light source 256 continuously illuminate the same area of substrate 306. Alternatively, first light source 254 and second light source 256 illuminate different areas of substrate 306. As Braille dot 304 moves under sensors line 302₁ (Figure 6A), sensors line 302₁ employed for acquiring a Braille inspection image produces output values corresponding to the energy impinging on the sensors. As Braille dot 304 moves under sensors line 302₂ (Figure 6B), 302₃ (Figure 6C), 302₄ (Figure 6D), sensors line 302₂, 302₃, 302₄, employed for acquiring a non-Braille inspection image produce output values corresponding to the energy impinging one the sensors.

When first light source 254 and second light source 256 illuminate the same area of substrate 306, the output values from sensor line 302₁, and sensor lines 302₂, 302₃, 302₄ are related to the energy reflected from that same area and which impinges on sensor line 302₁, and sensor lines 302₂, 302₃, 302₄. When first light source 254 and second light source 256 illuminate different areas of substrate 306 and the areas are located at a distance from each other (i.e., in the direction of movement of substrate 306), the output values of sensor line 302₁, and sensor lines 302₂, 302₃, 302₄ in detector 300, are synchronized with the movement of substrate 306, for example, by employing an encoder, such as a rotating pulse generator, which provides electronic input relating to the movement of the substrate. The electronic pulses from the rotating pulse generator are used to measure the distance between the illuminated areas and thus determine the shift between the Braille inspection image and the non-Braille inspection image. Similarly, when two different imagers are employed, as substrate 306 moves under each imager, the output values of the imagers, from first light source 254 and second light source 256 are also synchronized with the movement of substrate 260.

As noted above, although the disclosed technique is exemplified herein with reference to Braille, the disclosed technique is applicable for inspection of any 3D patterns. The cross-section of the 3D pattern should exhibit a conic-section shape. For example, the above described Braille dots exhibit hemispherical characteristics. However, the Braille dots may also exhibit a hemi-elliptical shape, or exhibit parabolic or hyperbolic characteristics. Similarly, for example, the cross-section of the protruding letters or symbols in cigarette packages should exhibit a conic-section shape. Thus, only light impinging on the 3D pattern, such that the angle of incident between the light a plane tangent to the highest point of the 3D pattern is equal to the angle between the optical axis of an imager and the plane, shall reflect back toward the imager. Thus, the 3D pattern shall appear as dark areas in the acquired image. Additionally, for example, when the cross-section of the 3D pattern exhibits the shape of a plateau, the edges of the pattern shall appear dark in an acquired image. The edges shall appear dark since, when the light source and imager are configured similarly to as described above in conjunction with Figures 4 and 5, light impinging on the edges shall not reflect back toward the imager. Thus, the 3D pattern may be inspected according to the acquired image of the edges thereof.

It will be appreciated by persons skilled in the art that the disclosed technique is not limited to what has been particularly shown and described hereinabove. Rather the scope of the disclosed technique is defined only by the claims, which follow.

## Claims

1. An inspection system of a printed substrate, said printed substrate at least including a three-dimensional pattern, said system comprising:
a light source, for emitting light beams toward said substrate, said light beams being substantially aligned when impinging on said substrate;
an imager, for acquiring an image of said substrate, said image including a representation of said three-dimensional pattern and of the matter printed on said substrate; and
a processor, coupled with said light source and said imager, for processing said acquired image to determine the correctness of said three-dimensional pattern.

2. The system according to claim 1, wherein a relative position between said light source and said imager is determined to maximize a contrast in said acquired image between representation of said matter printed on said substrate and said three-dimensional patterns.

3. The system according to claim 2, wherein said relative position between said imager and said light source is empirically determined.

4. The system according to claim 2, wherein said imager and said light source are positioned relative to each other such that optical axes of both said imager and said light source intersect a plane tangent to a highest point of said three-dimensional patterns at equal angles.

5. The system according to claim 1, wherein said three-dimensional patterns are Braille dot protrusions representing Braille.

6. The system according to claim 5, wherein said processor determines at least one of:
characters represented by said Braille;
an intended language content represented by said Braille;
a location of said Braille dots relative to each other;
the location of the Braille cell on the substrate;
a shape of said Braille dots;
a height of said Braille dots; and
a size of said Braille dots.

7. The system according to claim 1, wherein said imager is a line-scan camera comprising a one-dimensional line detector and acquires a two-dimensional images.

8. The system according to claim 1, wherein said imager is an area camera comprising a two-dimensional area detector which acquires a two-dimensional spatial image.

9. The system according to claim 1, wherein said light source emits light which conform to a selected standard.

10. The system according to claim 1, wherein said light source emits light at a selected spectral band

11. The system according to claim 10, wherein said selected spectral band is the infrared band.

12. The system according to claim 10, wherein said selected spectral band is the visible band.

13. The system according to claim 1, wherein said imager is a 4CCD camera comprising four CCD sensors, one for each color of an RGB color space and an additional infrared sensor sensitive to electromagnetic energy in the infrared band.

14. The system according to claim 13, further comprising a second light source coupled with said processor, said second light source for emitting light beams toward said substrate, said light beams emitted by said second light source exhibiting a respective spectral band different than said spectral band of said light emitted by said light source, said second light source being situated at different position relative to said light source.

15. The system according to claim 14, wherein said 4CCD camera acquires two images, one image in the spectral band respective of said light source and another image in the spectral band respective of the second light source,
wherein said another image is used to determine three-dimensional pattern characteristics and said one image is used to determine characteristics of said printed matter.

16. The system according to claim 14, further comprising a second imager, said imager acquires images in the spectral band respective of said light source and said second imager acquires images in the spectral band respective of said second light source.
